Europäisches Patentamt

European Patent Office

Office européen des brevets

(19)

(11) Veröffentlichungsnummer: **0 231 466**
B1

(12) **EUROPÄISCHE PATENTSCHRIFT**

(45) Veröffentlichungstag der Patentschrift:
24.10.90

(51) Int. Cl.⁵: **H04M 19/02, H04Q 11/04**

(21) Anmeldenummer: 86116428.3

(22) Anmeldetag: 26.11.86

(54) Schaltungsanordnung zur Schleifenschlussindikation während der Rufphase.

(30) Priorität: 20.12.85 DE 3545358

(43) Veröffentlichungstag der Anmeldung:
12.08.87 Patentblatt 87/33

(45) Bekanntmachung des Hinweises auf die Patenterteilung:
24.10.90 Patentblatt 90/43

(84) Benannte Vertragsstaaten:
AT BE CH DE FR GB IT LI LU NL SE

(56) Entgegenhaltungen:
ELECTRONIC ENGINEERING, Band 56, Nr. 691,
Juli 1984, Seiten 35-37, London, GB; F. CHERRICK et al.:
"Towards an all-digital communications network"
ELECTRONICS, 5. Mai 1982, Seiten 113-118, New York,
US; R. APFEL et al.: "Signal-processing chips enrich
telephone line-card architecture"
Zeitschrift "Elektronik", Heft 3, 08.02.85, L. Lerach et al,
""Peripheral Board Controller" für digitale
Vermittlungssysteme"

(73) Patentinhaber: Siemens Aktiengesellschaft,
Wittelsbacherplatz 2, D-8000 München 2(DE)

(72) Erfinder: Lechner, Robert, Dipl.-Ing., Haidfeldstrasse 5,
D-8156 Otterfing(DE)
Erfinder: Wingerath, Norbert, Dipl.-Ing.,
Zillertalstrasse 63, D-8000 München 70(DE)

## Beschreibung

Die Erfindung betrifft eine Schaltungsanordnung zur Schleifenschlußindikation während der Rufphase für eine Teilnehmerleitung, die über eine aus einem u.a. der Rufeinspeisung und der Signalisierung dienenden Teilnehmeranschlußschnittstellen-Baustein und einem u.a. der Realisierung der Analog-Digital-Wandlung und Digital-Analog-Wandlung sowie der Filterung dienenden Signalprozessorbaustein bestehende Teilnehmeranschlußschaltung an die Vermittlungsstelle einer digitalen Zeitmultiplex-Fernsprechanlage angeschlossen ist. Eine Teilnehmeranschlußschaltung der genannten Art ist in der Zeitschrift Elektronik, Heft 3 vom 08.02.1985 auf den Seiten 45–50 beschrieben.

An die Schleifenschlußindikation während der Rufphase werden im Hinblick auf die Empfindlichkeit und Ansprechzeit besondere Forderungen gestellt, weil bei geschlossener Teilnehmerleitungsschleife der dem Speisestrom überlagerte Rufsignalstrom über das Mikrofon der Teilnehmerstation fließt und zu Zerstörungen führen könnte, wenn die Zeitdauer bis zur Rufabschaltung zu groß ist.

Zum Zwecke der Rufindikation wurde bisher vom Leitungsstrom auf der Teilnehmeranschlußleitung eine proportionale Spannung abgeleitet, von der mit Hilfe eines Tiefpasses der durch das Rufsignal bedingte Wechselspannungsanteil herausgefiltert wurde. Mit einem gesonderten Komparator für die Rufindikation wurde ein Vergleich mit einem festeingestellten Schwellwert vorgenommen, bei dessen Überschreiten ein entsprechendes Signal abgegeben wurde, das in einem Gruppenprozessor ausgewertet wurde, also einem Prozessor, der einer Mehrzahl von Teilnehmeranschlußschaltungen zugeordnet ist.

Der Erfindung liegt nun die Aufgabe zugrunde, den Hardware-Aufwand einer solchen Rufindikationsschaltung zu verringern und dabei gleichzeitig im Hinblick auf die Wahl der Ansprechschwelle und der Ansprechzeit möglichst flexibel zu sein.

Erfindungsgemäß wird diese Aufgabe bei einer Schaltungsanordnung der eingangs genannten Art dadurch gelöst, daß diese Schaltungsanordnung eine Umschalteeinrichtung aufweist, mit deren Hilfe während der Rufphase dem Signalprozessor-Baustein anstelle des im Gesprächszustand anliegenden Sprachsignals ein dem Leitungsstrom auf der Teilnehmeranschlußleitung proportionales Spannungssignal zugeführt wird, daß eine dort übliche Analog-Digital-Wandlung und Filterung dieses Spannungssignals ohne eine sonst übliche Hochpaßfilterung stattfindet, daß eine Aufsummierung der entstehenden Digitalsignale über die wenigstens einfache Periodendauer der Rufsignalfrequenz durchgeführt wird, daß ein Vergleich des durch die Aufsummierung entstehenden Summensignals mit einem Bezugswert stattfindet, bei dessen Überschreiten ein den Schleifenschluß anzeigendes Signal abgegeben wird.

Der Erfindung liegt also die Idee zugrunde, die Fähigkeiten des Signalprozessorbausteins für die Rufindikation nutzbar zu machen. Da die Voraussetzungen dafür zum größten Teil in einer entsprechenden Anpassung der Software des Prozessors liegen, dafür aber die bisher erwähnten Hardware-Bestandteile für die Rufindikation entfallen, ist der Hardware-Aufwand der erfindungsgemäßen Schaltungsanordnung insgesamt geringer.

Weitere Ausgestaltungen der Erfindung betreffen Ausführungsvarianten bei der Aufsummierung und Schwellenbewertung des in der Rufphase vom Schleifenstrom abgeleiteten Digitalsignals, die es ermöglichen, das erfindungsgemäße Konzept optimal an die praktischen Gegebenheiten anzupassen, nämlich an die dem Vermittlungssystem, dem die erfindungsgemäße Schaltungsanordnung angehört, zugrundeliegenden Abtastrate an . Schaltverhalten beim Anschalten des Rufsignals.

Noch eine andere Ausgestaltung der Erfindung betrifft den Sonderfall, daß die Rufsignale der Teilnehmeranschlußschaltung als Digitalsignale zugeführt oder aber im Signalprozessorbaustein selbst als Digitalsignale erzeugt werden, dort einer Digital-Analog-Wandlung unterworfen und der Leitungsverstärkerschaltung der Teilnehmeranschlußschaltung zugeführt werden, wozu bei der Eingangsstufe dieser Verstärkerschaltung eine rufsignalspezifische Verstärkung und bei deren Ausgangsstufe eine dementsprechende spezifische Vorspannung wirksam geschaltet werden.

Das beim Vergleich sich ergebende Schleifenschlußsignal wird in diesem Fall außer zur Unterbrechung der Zufuhr bzw. der Erzeugung der digitalen Rufsignale zur weiteren Umschaltmaßnahmen herangezogen.

Nachstehend wird die Erfindung anhand eines Ausführunbgsbeispiels unter Bezugnahme auf eine Figur näher erläutert.

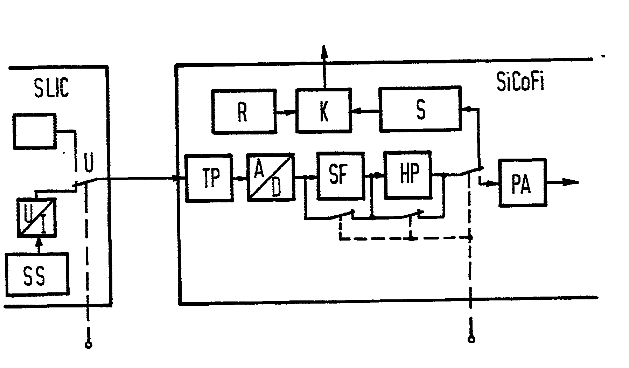

Die Figur zeigt auf der linken Seite einen Teilnehmeranschlußschnittstellenbaustein SLIC, der u.a. der Rufeinspeisung und der Signalisierung dient. Weitere Funktionen des Schnittstellenbausteins sind die Speisung des Endgeräts, die Zweidraht-Vierdrahtumwandlung (Gabelfunktion), die Überwachungsschleifenzustandes außerhalb der Rufphase und das Testen von Signalwegen.

Im Zusammenhang mit der erfindungsgemäßen Schaltungsanordnung interessiert von diesem Schnittstellenbaustein im wesentlichen nur ein Umschalter U, über den entweder das auf der Teilnehmeranschlußleitung, die auf diesem Schnittstellenbaustein mündet, auftretende Sprachsignal oder aber ein vom Leitungsstrom mit Hilfe eines Leitungsstromsensors SS abgeleitetes und durch einen Strom-Spannungswandler I/U erzeugtes Spannungssignal an den Ausgang geschaltet wird. Der rechte Teil der Figur zeigt einen Signalprozessorbaustein ALAP, der u.a. der Analog-Digital-Wandlung des ihm vom Schnittstellenbaustein SLIC zugehenden Analogsignals bzw. der Digital-Analog-Wandlung von ihm über das hier nicht dargestellte Koppelfeld gelieferten Digitalsignalen, sowie der Filterung in Senderichtung und in Empfangsrichtung dient.

In der Figur sind nur die zum Empfangszweig gehörenden Einrichtungen bzw. Funktionen angedeutet. Es sind dies ein Analog-Digital-Wandler A/D sowie ein eingangsseitiges Tiefpaßfilter, das dafür sorgt, daß Signalspannungen mit Frequenzen oberhalb der halben Abtastfrequenz, mit der die Analog-Digital-Wandlung betrieben wird, nicht an den Analog-DigitalWandler gelangen können. Ferner sind dies ein Sprachfilter SF und schließlich ein Hochpaßfilter angebracht, das für die Unterdrückung der Netzfrequenzkomponenten sorgt.

In der Praxis sind lediglich der Tiefpaß TP und die Einrichtung zur Analog-Digital-Wandlung A/D Hardware-Einrichtungen, wogegen die Funktionen der Sprachfilterung und der Hochpaßfilterung aufgrund eines entsprechenden Betriebsprogramms des Signalprozessorbausteins realisiert werden.

Die Figur zeigt ferner, daß sowohl das Sprachfilter als auch der Hochpaß umgangen werden können, was bei der erfindungsgemäß durchgeführten Rufindikation zumindest im Falle des Hochpaßfilters ausgenutzt wird, und in der Praxis durch eine entsprechend geänderte Signalbearbeitungsprozedur erreicht wird.

Ein Bestandteil des Signalprozessorbausteins ALAP sind in ferner ein Summierer S, dessen Ausgangsignal einem Vergleicher K zugeführt wird, der außerdem von einem Referenzspannungsgeber R einen einstellbaren Bezugswert zugeführt erhält. Auch die Funktionen des Summierers, des Vergleichers des Refernzwertgebers werden durch entsprechenden Betrieb des Signalprozessors realisiert.

Nachstehend wird die Funktion der erfindungsgemäßen Schaltungsanordnung noch näher erläutert.

Während der Rufphase, die hier zu betrachten ist, gelten die in der Figur dargestellten Schalterstellungen, bzw.entsprechenden Betriebsweisen, d.h. an den Eingang des Signalprozessorbausteins ALAP ist über den Umschalter U anstelle eines auf den Teilnehmeranschlußleitungen auftretenden Sprachsignals ein Spannungssignal geschaltet, das mit Hilfe des Leitungssensors SS und des Strom-Spannungswandlers I/U aus dem über die Teilnehmeranschlußleitung fließenden Strom gewonnen wird, ferner heißt dies, daß zumindest die Funktion des Hochpasses HP nicht realisiert ist. Das heißt außerdem, daß durch den Analog-Digital-Wandler abgegebene Digitalsignale nicht über die PCM-Anschlußeinheit PA an das Koppelfeld der Vermittlungs stelle weitergegeben werden, deren Bestandteil die dargestellte Schaltungsanordnung ist, sondern einer Summierung unterzogen werden. Die Summierung erfolgt über die einfache Periodendauer, oder vorzugsweise über ein Mehrfaches der Periodendauer der Rufsignalfrequenz. Hierdurch werden die Wechselanteile der Rufsignalspannung eliminiert, so daß nur der Gleichanteil der dem Signalprozessorbaustein zugeführten Spannung zur Auswertung gelangt. Wenn das bei der Summierung sich ergebende Signal den Wert der Bezugsspannung übersteigt, ist dies ein Anzeichen für den erfolgten Schleifenschluß. Das hierbei entstehende Signal wird ausgewertet und veranlaßt in nicht dargestellter Art und Weise die Abschaltung der Rufsignalspannung. Um Fehlauswertungen zu vermeiden, die durch Überschwingspannungen beim Einschalten der Rufsignalspannung zustande kommen können, wird erfindungsgemäß zu Beginn der Rufphase ein höherer Bezugswert dem Vergleich zugrunde gelegt, der im eingeschobenen Zustand durch einen niedrigeren Bezugswert ersetzt wird.

Im vorstehenden Fall der digitalen Erzeugung des Rufsignals durch den Signalprozessor selbst, wird das den Schleifenschluß anzeigende Signal direkt zur Unterbrechung der Rufsignalerzeugung und im Teilnehmeranschlußschnittstellenbaustein SLIC zur Umschaltung des Verstärkungsgrades bzw. der Vorspannung bei der Eingangsstufe bzw. der Ausgangsstufe der hier nicht dargestellten Empfangsverstärkerschaltung des Bausteins herangezogen.

## Patentansprüche

1. Schaltungsanordnung zur Schleifenschlußindikation während der Rufphase für eine Teilnehmerleitung, die über eine aus einem u.a. der Rufeinspeisung und der Signalisierung dienenden Teilnehmeranschlußschnittstellenbaustein (SLIC) und einem u.a. der Realisierung der Analog-Digital-Wandlung und Digital-Analog-Wandlung sowie der Filterung dienenden Signalprozessorbaustein (ALAP) bestehende Teilnehmeranschlußschaltung an die Vermittlungsstelle einer digitalen Zeitmultiplex-Fernsprechanlage angeschlossen ist, gekennzeichnet durch
   a) eine Umschalteeinrichtung (U), durch die während der Rufphase dem Signalprozessorbaustein (ALAP) anstelle des im Gesprächszustand anliegenden Sprachsignals ein dem Leitungsstrom auf der Teilnehmeranschlußleitung proportionales Spannungssignal zugeführt wird,
   b) eine dort übliche Analog-Digital-Wandlung und Filterung dieses Spannungssignals, jedoch ohne sonst übliche Hochpaßfilterung,
   c) eine Aufsummierung der entstehenden Digitalsignale über die wenigstens einfache Periodendauer der Rufsignalfrequenz,
   d) einen Vergleich des durch die Aufsummierung entstehenden Summensignals mit einem Bezugswert, bei dessen Überschreiten ein den Schleifenschluß anzeigendes Signal abgegeben wird.

2. Schaltungsanordnung nach Anspruch 1, dadurch gekennzeichnet, daß nur ein Bruchteil der entsprechend der Abtastrate bei der Analog-Digital-Wandlung je Zeiteinheit entstehenden Digitalsignale bei der Aufsummierung berücksichtigt wird.

3. Schaltungsanordnung nach Anspruch 1 oder 2, dadurch gekennzeichnet, daß unmittelbar nach Beginn der Rufphase dem Vergleich ein höherer Bezugswert zugrunde gelegt wird als nach Ablauf einer Einschwingzeit.

4. Schaltungsanordnung nach einem der vorhergehenden Ansprüche, bei der die Rufsignale der Teilnehmeranschlußschaltung als Digitalsignale zugeführt oder im Signalprozessorbaustein der Teilnehmeranschlußschaltung als Digitalsignale erzeugt werden und nach einer Digital-Analog-Wandlung dem Empfangsverstärker der Teilnehmeranschlußschaltung zugeführt werden, bei dessen Eingangsstufe eine rufsignalspezifische Verstärkung und bei dessen Ausgangsstufe eine dementsprechende spezifische Vorspannung wirksam geschaltet sind, dadurch gekennzeichnet, daß durch das Schleifenschlußsignal außer einer Unterbrechung der Zufuhr bzw. Erzeugung der digitalen Rufsignale eine Umschaltung der Verstärkung und der Vorspannung der genannten Verstärkerstufen auf der Sprachsignalübertragung entsprechende Werte veranlaßt wird.

## Claims

1. Circuit arrangement for indicating loop formation during the ringing phase for a subscriber line which is connected to the exchange of a digital time-division multiplex telephone system via a subscriber line circuit composed of a subscriber line interface component (SLIC) serving, inter alia, for the ringing signal injection and the signalling, and of a signal processor component (ALAP)) serving, inter alia, for the realization of the analog/digital conversion and digital/analog conversion and also the filtering, characterized by
    a) a switchover device (U), by means of which a voltage signal proportional to the line current on the subscriber line is fed to the signal processor component (ALAP) during the ringing phase instead of the voice signal present in the call condition,
    b) an analog/digital conversion and filtering of said voltage signal which is customary there, but without the otherwise customary high-pass filtering,
    c) a summing of the resulting digital signals over the at least simple period duration of the ringing signal frequency, and
    d) a comparison of the composite signal resulting from the summation with a reference value, a signal indicating the loop formation being output when said value is exceeded.

2. Circuit arrangement according to Claim 1, characterized in that only a fraction of the digital signals occurring per unit of time in accordance with the sampling rate during the analog/digital conversion is taken into account during the summation.

3. Circuit arrangement according to Claim 1 or 2, characterized in that, immediately after the ringing phase commences a higher reference value is used as a base for the comparison than after expiry of a transient period.

4. Circuit arrangement according to one of the preceding claims, in which the ringing signals are fed as digital signals to the subscriber line circuit or are generated as digital signals in the signal processor component of the subscriber line circuit and are fed after a digital/analog conversion to the receiving amplifier of the subscriber line circuit, at the input stage of which a ringing signal-specific amplification activated and at the output stage of which a correspondingly specific bias is activated, characterized in that, except for an interruption of the supply or generation of the digital ringing signals, the loop formation signal causes a switchover of the amplification and the bias of said amplifier stages to values corresponding to the voice signal transmission.

## Revendications

1. Montage servant à indiquer la fermeture de boucle pendant la phase d'appel dans une ligne d'abonné, qui est raccordée au central d'une installation téléphonique numérique de multiplexage temporel, par l'intermédiaire d'un circuit de raccordement d'abonné constitué par un module d'interface de raccordement d'abonné (SLIC), utilisé notamment pour l'introduction d'un appel et la signalisation, et un module formant processeur de traitement de signaux (ALAP), utilisé notamment pour réaliser la conversion analogique/numérique et la conversion numérique/analogique ainsi que le filtrage, caractérisé par
    a) un dispositif de commutation (U), au moyen duquel un signal de tension proportionnel au courant de ligne présent dans la ligne d'abonné est envoyé, pendant la phase d'appel, au module formant processeur de traitement de signaux (ALAP), à la place du signal vocal appliqué pendant l'état de conversation,
    b) une conversion analogique/numérique et un filtrage de ce signal, qui sont usuels dans ce cas, mais sans filtrage passe-haut qui sinon est usuel,
    c) une sommation des signaux numériques, qui apparaissent, pendant au moins une durée de la période correspondant à la fréquence du signal d'appel,
    d) une comparaison du signal somme, qui est obtenu par la sommation, à une valeur de référence, lors du dépassement de laquelle un signal indiquant la fermeture de boucle est délivré.

2. Montage suivant la revendication 1, caractérisé par le fait que seule une fraction des signaux numériques, qui apparaissent pendant chaque intervalle de temps en fonction de la fréquence d'échantillonnage lors de la conversion analogique/numérique est prise en compte dans la sommation.

3. Montage suivant la revendication 1 ou 2, caractérisé par le fait que pour la comparaison on utilise, juste après le début de la phase d'appel, une valeur de référence plus élevée qu'après l'écoulement d'une durée transitoire.

4. Montage suivant l'une des revendications précédentes, dans lequel les signaux d'appel du circuit de raccordement d'abonné sont envoyés sous la forme de signaux numériques ou sont produits, dans le module formant processeur de signaux du circuit de raccordement d'abonné en tant que signaux numériques et sont envoyés, après une conversion numérique/analogique, à l'amplificateur de réception du circuit de raccordement d'abonné, dans l'étage d'entrée duquel est mise en œuvre une amplification spécifique au signal d'appel et dans l'étage de sortie duquel est mise en œuvre une tension de polarisation spécifique correspondante, caractérisé par le fait que le signal de fermeture de boucle déclenche, en dehors d'une interruption de l'envoi ou de la production des signaux numériques, une commutation de l'amplification ou de la tension de polarisation des étages amplificateurs indiqués sur des valeurs correspondant à la transmission de signaux vocaux.

EP 0 231 466 B1